# EUROPÄISCHE PATENTSCHRIFT

(11) **EP 2 974 952 B1**
(45) Veröffentlichungstag und Bekanntmachung des Hinweises auf die Patenterteilung: **10.10.2018**
(21) Anmeldenummer: 15175492.6
(22) Anmeldetag: 06.07.2015
(51) Int. Cl.: B63B 3/54, B63B 39/03, B63B 9/00

(54) **SCHIFF MIT OFFENEN LADERÄUMEN UND VERFAHREN ZUR AUSLEGUNG EINES DERARTIGEN SCHIFFES**
SHIP WITH OPEN LOAD COMPARTMENTS AND METHOD FOR DESIGNING SUCH A SHIP
NAVIRE A CALES OUVERTES ET PROCEDE DE CONCEPTION D'UN TEL BATEAU

(30) Priorität: 04.07.2014 DE 102014109346
(43) Veröffentlichungstag der Anmeldung: 20.01.2016
(73) Patentinhaber: SDC Ship Design & Consult GmbH, 22305 Hamburg (DE)
(72) Erfinder: Jensen, Harald, 25572 Ecklak (DE)
(74) Vertreter: Hauck Patentanwaltspartnerschaft mbB

(56) Entgegenhaltungen:
- Nigel Gee: "NEW DEVELOPMENTS IN CONTAINER VESSEL DESIGN", , 16. Dezember 2011 (2011-12-16), XP055243223, Gefunden im Internet: URL:http://media.bmt.org/bmt_media/resourc es/29/paper10.pdf [gefunden am 2016-01-20]
- STEFAN WINKLER ET AL: "Passive roll damping on containerships in slow steaming conditions", HANSA., Bd. 149 - Year 2012, Nr. 9, 9. September 2012 (2012-09-09), Seiten 68-70, XP055243113, DE ISSN: 0017-7504
- Ir J.J Van Den Bosch: "SOME NOTES ON ROLL STABILIZATION BY MEANS OF FREE SURFACE TANKS", , 15. September 1964 (1964-09-15), XP055243117, Gefunden im Internet: URL:http://mararchief.tudelft.nl/file/3865 1/ [gefunden am 2016-01-20]
- OSAMA A. MARZOUK ET AL: "Control of ship roll using passive and active anti-roll tanks", OCEAN ENGINEERING, vol. 36, no. 9-10, 1 July 2009 (2009-07-01), pages 661-671, XP055375560, AMSTERDAM, NL ISSN: 0029-8018, DOI: 10.1016/j.oceaneng.2009.03.005
- MARZOUK O A ET AL: "Control of ship roll using passive and active anti-roll tanks", OCEAN ENGINEERING, PERGAMON, AMSTERDAM, NL, vol. 36, no. 9-10, 1 July 2009 (2009-07-01), pages 661-671, XP026151246, ISSN: 0029-8018, DOI: 10.1016/J.OCEANENG.2009.03.005 [retrieved on 2009-03-21]
- Frank H Sellars ET AL: "Selection and Evaluation of Ship Roll Stabilization Systems", Marine Technology, 30 April 1992 (1992-04-30), pages 84-101, XP55243128, Retrieved from the Internet: URL:http://www.sname.org/HigherLogic/Syste m/DownloadDocumentFile.ashx?DocumentFileKe y=27116359-2f21-4c62-ae24-7b75ab7dfde8 [retrieved on 2016-01-20]

## Beschreibung

Die Erfindung bezieht sich auf ein Schiff mit offenen Laderäumen oder bei dem die Laderäume zumindest zeitweise ohne Lukendeckel benutzt werden und auf ein Verfahren zur Auslegung eines derartigen Schiffes.

Bei Schiffen, die dauerhaft oder zeitweise auf offener See mit offenen Laderäumen ohne den Einsatz von Lukendeckel gefahren werden, muss nach internationalen Vorschriften durch Modellversuche nachgewiesen werden, dass sie unter für das Schiff ungünstigen Wetterbedingungen (Seegang) einerseits eine stabile Schwimmlage behalten und andererseits die Menge des grünen Wassers (ungebrochen an Deck eintreffendes Wasser), das sich im Laderaum sammelt, beherrschbar bleibt.

Um sowohl eine ausreichende Stabilitätsreserve im Seegang vorzuhalten, bevor der offene Laderaum zu Wasser kommt, als auch Menge des in den Laderaum überkommenden grünen Wassers zu begrenzen, werden Schiffe mit offenem oder zeitweise offen gefahrenem Laderaum mit deutlich mehr Seitenhöhe und/oder mit zusätzlichen wellenbrechenden Schutzsüllen um den Laderaum herum gebaut. Diese Maßnahmen behindern aber in der Regel den Ladungsumschlag, verringern die Staumöglichkeiten für Ladung an Deck und erhöhen das Schiffsgewicht und damit den Baupreis des Schiffes im Vergleich zu gleichwertigen Schiffen mit Lukendeckeln über den Laderäumen.

Andererseits ist bekannt, dass passive Rollstabilisierungstanks (z. B. Flumetanks oder passive U-Tanks) zu einer systembedingten Reduzierung des Rollens von Schiffen führen, ohne dass technische Einrichtungen involviert sind, deren Ausfall zum Verlust der rollreduzierenden Wirkung dieser Tanks führen könnte. Passive Rollstabilisierungstanks bestehen grundsätzlich aus einem Behälter, der teilweise mit Wasser gefüllt ist und sich in Richtung der Breite des zu stabilisierenden Schiffes erstreckt. Beim Rollen fließt das Wasser in dem Tank mit einer Phasenverschiebung zur Rollbewegung des Schiffes hin und her. Infolgedessen erzeugt das Wasser in dem Tank ein Moment, welches der Rollbewegung entgegenwirkt und diese vermindert. Zur Steuerung der Verzögerung der Bewegung des Wassers im Tank kann dieser mit Schwallblechen ausgestattet sein. Passive Rollreduzierungstanks kommen bislang bei großen Passagierschiffen und Fähren zum Einsatz.

Nigel Gee "New Developments in Container Vessel Design", 16. Dezember 2011 (2011-12-16), XP055243223 beschreibt ein Schiff mit offenem Laderaum und einer Interring-Rollstabilisierüngsanlage. Das Schiff mit einer Kapazität von 1387 TEU verfügt über eine Seitenhöhe von fast 22 m, die im Bereich der offenen Laderäume noch einmal durch seitliche Aufbauten von etwa 3 m erhöht wurde. Bei einem Tiefgang von 9,4 m ergibt sich ein Freibord zu den offenen Laderäumen von etwa 16 m.

Stefan Winkler et al. "Passive Roll Damping on Containerships in Slow Steaming Conditions", HANSA, Bd. 149 - Year 2012, Nr. 9, 9. September 2012 (2012-09-09), Seiten 68-70, XP055243113, DE ISSN: 0017-7504 beschreibt das Dämpfungsverhalten von U- und Flume-Tanks beim Slow Steaming.

Ir J.J. Van Den Bosch: "Some Notes On Roll Stabilization By Means of Free Surface Tanks", 15. September 1964 (1964-09-15), XP055243117 beschreibt die Rollstabilisierung von Schiffen, die einsatzbedingt ein hohes Metazentrum und einen niedrigen Freibord aufweisen, wie Trawler, Schlepper und Versorgungsschiffe für Offshore-Bohranlagen. Es wird darauf hingewiesen, dass bei diesen Schiffen die Arbeit an Deck außerordentlich ermüdend und teilweise gefährlich ist. Dies beruht darauf, dass bauartbedingt hohe Beschleunigungen an Deck auftreten. Die Rollstabilisierungseinrichtungen dienen dazu, die Beschleunigungen zu reduzieren. Osama A. Marzouk et al: "Control of Ship Roll Using Passive and Active Anti-Roll Tanks", OCEAN ENGINEERING, Bd. 36, Nr. 9-10, 1. Juli 2009 (2009-07-01), Seiten 661-671, XP055375560, AMSTERDAM, NL, ISSN: 0029-8018, DOI: 10.1016/j.oceaneng. 2009.03.005 ist eine Übersicht über passive und aktive Rollstabilisierun gstanks.

Frank H. Sellars et al: "Selection and Evaluation of Ship Roll Stabilization Systems", Marine Technology, 30. April 1992 (1992-04-30), Seiten 84-101, XP55243128 behandelt Kriterien bei der Auslegung von Rollstabilisierungssystemen für Schiffe.

Davon ausgehend liegt der Erfindung die Aufgabe zugrunde, ein Schiff mit offenen Laderäumen oder das zumindest zeitweise mit offenen Laderäumen betrieben wird zu schaffen, das mit geringerer Seitenhöhe bzw. ohne oder mit zusätzlichen Schutzsüllen geringerer Höhe auskommt. Ferner ist die Erfindung auf ein Verfahren zur Auslegung eines derartigen Schiffes gerichtet.

Die Aufgabe wird durch ein Schiff mit den Merkmalen von Anspruch 1 gelöst. Vorteilhafte Ausgestaltungen der Erfindung sind in Unteransprüchen angegeben.

Das erfindungsgemäße Schiff mit offenen Laderäumen ist dadurch gekennzeichnet, dass es mindestens eine passive Rollstabilisierungseinrichtung aufweist und die Seitenhöhe unter Berücksichtigung der Wirkung der passiven Rollstabilisierungseinlagen bemessen ist, sodass sie die Seitenhöhe eines gleichwertigen Schiffes ohne die passive Rollstabilisierungseinrichtung unterschreitet.

Durch Einsatz von passiven Rollstabilisierungseinrichtungen auf Schiffen mit offenen oder offen gefahrenen Laderäumen können diese mit weniger Stabilitätsreserven für die Dynamik im Seegang gebaut werden. Gleichzeitig reduziert das geringere Rollen des Schiffes im Seegang den Eintrag von grünem Wasser in den offenen Laderäumen. Da die Rollstabilisierungseinrichtungen passiv sind, d. h. allein durch die Bewegung des Schiffes betrieben werden, kann ihre Wirkung in den Modellversuchen nach internationalen Vorschriften berücksichtigt werden. Die Nutzung des Schiffes mit offenen oder offen betriebenen Laderäumen auf See ist dann lediglich an die Forderung gebunden, dass die Tanks vor Antritt der Reise in der erforderlichen Weise gefüllt worden sind. Im Ergebnis können Schiffe entsprechend des Patentes mit einer Seitenhöhe bzw. Lukensüllhöhe gebaut werden, die so bemessen ist wie bei Schiffen mit Lukendeckeln über den Laderäumen. Die Seitenhöhe bzw. Lukensüllhöhe ist weitgehend begrenzt nur noch durch die normalen Intakt/-Leckstabilitätsforderungen, wie sie für alle Schiffe gültig sind. Die zusätzlichen Forderungen für Schiffe mit offenen Laderäumen werden dank der passiven Rollstabilisierungseinrichtungen trotzdem erfüllt.

Die Seitenhöhe des Schiffes ist unter Berücksichtigung der Wirkung der passiven Rollstabilisierungseinrichtung bemessen, sodass sie die Seitenhöhe eines gleichwertigen Schiffes ohne die passive Rollstabilisierungseinrichtung unterschreitet. Hierdurch wird im Vergleich zu einem gleichwertigen Schiff ohne passive Rollstabilisierungseinrichtung ein schnellerer Ladungsumschlag ermöglicht, die Staumöglichkeiten für Ladung an Deck vergrößert und das Schiffsgewicht und der Baupreis des Schiffes verringert. Unter einem gleichwertigen Schiff wird ein Schiff verstanden, das bis auf die Seitenhöhe übereinstimmende Schiffsmaße aufweist. Bei übereinstimmendem Tiefgang weist somit das erfindungsgemäße Schiff einen geringeren Freibord als das gleichwertige Schiff auf.

Gemäß einer weiteren Ausgestaltung weisen die offenen Laderäume keine Schutzsülle oder Schutzsülle geringerer Höhe als bei einem gleichwertigen Schiff ohne die passive Rollstabilisierungseinrichtung auf. Hierdurch wird im Vergleich zu gleichwertigen Schiffen ohne passive Rollstabilisierungseinrichtungen ein schnellerer Ladungsumschlag ermöglicht, die Staumöglichkeiten für Ladung an Deck vergrößert und das Schiffsgewicht und der Baupreis des Schiffes verringert. Unter einem gleichwertigen Schiff wird ein Schiff verstanden, das bis auf die Schutzsülle übereinstimmende Schiffsmaße aufweist. Bei übereinstimmendem Tiefgang weist somit das erfindungsgemäße Schiff einen geringeren Abstand von der Oberkante der Schutzsülle zum Freibord auf.

Gemäß einer weiteren Ausgestaltung wird die Wirkung der passiven Rollstabilisierungseinrichtung bei Entwurf des Schiffes in den Modellversuchen zum Nachweis ausreichender Stabilität des Schiffes und zur Ermittlung der Menge des überkommenden Wassers in den offenen Laderäumen berücksichtigt. Durch die Modellversuche wird der Nachweis erbracht, dass das Schiff mit der passiven Rollstabilisierungseinrichtung eine hinreichend hohe Seitenhöhe aufweist bzw. ohne Schutzsülle oder mit Schutzsüllen verringerter Höhe auskommt.

Gemäß einer weiteren . Ausgestaltung umfasst die passive Rollstabilisierungseinrichtung mindestens einen passiven Rollstabilisierungstank. Der passive Rollstabilisierungstank ist gemäß einer bevorzugten Ausgestaltung ein Flumetank oder ein passiver U-Tank. In dem passiven Tank wird das Wasser ausschließlich durch die Bewegung des Schiffes verlagert. Die Erfindung bezieht die Anwendung von gesteuerten passiven Rollreduzierungstanks ein. Diese weisenSysteme zum Steuern der Wasser und/oder Luft- Strömung zwischen verschiedenen Teilen des Tanks auf.

Die Erfindung wird durch ein Verfahren mit den Merkmalen von Anspruch 7 gelöst. Vorteilhafte Ausgestaltungen des Verfahrens sind in Unteransprüchen angegeben.

Das erfindungsgemäße Verfahren zur Auslegung eines Schiffes mit offenen Laderäumen ist dadurch gekennzeichnet, dass das Schiff mit einer passiven Rollstabilisierungseinrichtung versehen wird und die Seitenhöhe des Schiffes und/oder die Notwendigkeit und Höhe zusätzlicher Schutzsülle um die Laderäume unter Berücksichtigung der rollreduzierenden Wirkung der passiven Rollreduzierungseinrichtung ermittelt wird.

Dem erfindungsgemäßen Verfahren kommen die zum erfindungsgemäßen Schiff angegebenen vorteilhaften Wirkungen entsprechend zu.

Gemäß einer bevorzugten Ausgestaltung des Verfahrens wird die Wirkung der passiven Rollreduzierungseinrichtung in Modellversuchen zum Nachweis ausreichender Stabilität des Schiffes und zur Ermittlung der Menge des überkommenden Wassers in den offenen Laderäumen berücksichtigt.

Gemäß einer weiteren Ausgestaltung wird das Schiff mit mindestens einem passiven Rollreduzierungstank versehen. Hierbei handelt es sich vorzugsweise um einen Flumetank oder um einen U-Tank.

Das erfindungsgemäße Schiff ist gemäß einer Ausgestaltung ein offenes Containerschiff oder ein Offshore-Versorgungsschiff (Versorgungsschiff für Offshore-Bauten) oder ein Rohrverlegungs-Schiff oder ein Windmühlen-Aufstellschiff oder ein anderes Mehrzweck-Frachtschiff oder Arbeitsschiff mit permanent oder zeitweise offenen Laderäumen.

## Patentansprüche

1. Schiff mit offen betriebenen Laderäumen, **dadurch gekennzeichnet, dass** es mindestens eine passive Rollstabilisierungseinrichtung aufweist und, bei dem die Seitenhöhe unter Berücksichtigung der Wirkung der passiven Rollstabilisierungseinrichtung bemessen ist, sodass sie die Seitenhöhe eines gleichwertigen Schiffes ohne die passive Rollstabilisierungseinrichtung unterschreitet.

2. Schiff nach Anspruch 1, bei dem die offenen Laderäume keine Schutzsülle oder Schutzsülle geringerer Höhe als ein gleichwertiges Schiff ohne die passive Rollstabilisierungseinrichtung aufweisen.

3. Schiff nach Anspruch 1 oder 2, bei dem die Wirkung der passiven Rollstabilisierungseinrichtung beim Entwurf des Schiffes in Modellversuchen zum Nachweis ausreichender Stabilität des Schiffes und zur Ermittlung der Menge des überkommenden Wassers in den offenen Laderäumen berücksichtigt ist.

4. Schiff nach einem der Ansprüche 1 bis 3, bei dem die passive Rollstabilisierungseinrichtung mindestens einen passiven Rollstabilisierungstank umfasst.

5. Schiff nach einem der Ansprüche 1 bis 4, bei dem der passive Rollstabilisierungstank ein Flumetank oder ein U-Tank ist.

6. Verfahren zur Auslegung eines Schiffes mit offen betriebenen Laderäumen, **dadurch gekennzeichnet, dass** das Schiff mit einer passiven Rollstabilisierungseinrichtung versehen wird und die Seitenhöhe des Schiffes und/oder die Notwendigkeit und Höhe zusätzlicher Schutzsülle unter Berücksichtigung der rollreduzierenden Wirkung der passiven Rollreduzierungseinrichtung ermittelt wird.

7. Verfahren nach Anspruch 6, bei dem die Wirkung der passiven Rollreduzierungseinrichtung in Modellversuchen zum Nachweis ausreichender Stabilität des Schiffes und zur Ermittlung der Menge des überkommenden Wassers in den offenen Laderäumen berücksichtigt wird.

8. Verfahren nach Anspruch 6 oder 7, bei dem das Schiff mit mindestens einem passiven Rollreduzierungstank versehen wird.

9. Verfahren nach Anspruch 8, bei dem das Schiff mit mindestens einem Flumetank und/oder mindestens einem U-Tank versehen wird.

## Claims

1. A ship with openly operated holds, **characterized in that** is has at least one passive roll stabilization apparatus and in which the side height is dimensioned taking into account the effect of the passive roll stabilization apparatus so that it falls below the side height of an equivalent ship without the passive roll stabilization apparatus.

2. The ship according to claim 1, in which the open holds have no protective coamings or protective coamings with a lower height than an equivalent ship without the passive roll stabilization apparatus.

3. The ship according to claim 1 or 2, in which the effect of the passive roll stabilization apparatus is taken into account when designing the ship in model tests to prove sufficient stability of the ship and to establish the amount of water coming over in the open holds.

4. The ship according to one of claims 1 to 3, in which the passive roll stabilization apparatus comprises at least one passive roll stabilization tank.

5. The ship according to one of claims 1 to 4, in which the passive roll stabilization tank is a flume tank or a U-tank.

6. A method for configuring a ship with openly operated holds, **characterized in that** the ship is provided with a passive roll stabilization apparatus and the side height of the ship and/or the necessity and height of additional protective coamings are determined taking into account the roll-reducing effect of the passive roll reduction apparatus.

7. The method according to claim 6, in which the effect of the passive roll reduction apparatus is taken into account in model tests to prove sufficient stability of the ship and to establish the amount of water coming over in the open holds.

8. The method according to claim 6 or 7, in which the ship is provided with at least one passive roll reduction tank.

9. The method according to claim 8, in which the ship is provided with at least one flume tank and/or at least one U-tank.

## Revendications

1. Bateau avec des cales exploitées de manière ouverte, **caractérisé en ce qu'**il présente au moins un dispositif de stabilisation de roulis passif et dans lequel la hauteur latérale est dimensionnée en tenant compte de l'effet du dispositif de stabilisation de roulis passif, de sorte qu'elle est inférieure à la hauteur latérale d'un bateau équivalent sans le dispositif de stabilisation de roulis passif.

2. Bateau selon la revendication 1, dans lequel les cales ouvertes ne présentent aucune hiloire de protection ou des hiloires de protection d'une hauteur plus faible qu'un bateau équivalent sans le dispositif de stabilisation de roulis passif.

3. Bateau selon la revendication 1 ou 2, dans lequel l'effet du dispositif de stabilisation de roulis passif est pris en considération lors de la conception du bateau dans des essais-types visant à démontrer une stabilité suffisante du bateau et à déterminer la quantité d'eau submergeant les cales ouvertes.

4. Bateau selon l'une des revendications 1 à 3, dans lequel le dispositif de stabilisation de roulis passif comporte au moins une cuve de stabilisation de roulis passive.

5. Bateau selon l'une des revendications 1 à 4, dans lequel la cuve de stabilisation de roulis passive est une citerne antiroulis ou une citerne à tube en U.

6. Procédé destiné à concevoir un bateau avec des cales exploitées de manière ouverte, **caractérisé en ce que** le bateau est équipé d'un dispositif de stabilisation de roulis passif et **en ce que** la hauteur latérale du bateau et/ou la nécessité et la hauteur d'hiloires de protection supplémentaires sont déterminées en tenant compte de l'effet réducteur de roulis du dispositif de réduction de roulis passif.

7. Procédé selon la revendication 6, dans lequel l'effet du dispositif de réduction de roulis passif est pris en considération dans des essais-types visant à démontrer la stabilité suffisante du bateau et à déterminer la quantité d'eau submergeant les cales ouvertes.

8. Procédé selon la revendication 6 ou 7, dans lequel le bateau est équipé d'au moins une cuve de réduction de roulis passive.

9. Procédé selon la revendication 8, dans lequel le bateau est équipé d'au moins une citerne antiroulis et/ou au moins d'une citerne à tube en U.
